# FASCICULE DE BREVET EUROPEEN

(11) **EP 1 069 024 B1**
(45) Date de publication et mention de la délivrance du brevet: **07.05.2003**
(21) Numéro de dépôt: 00420157.0
(22) Date de dépôt: 10.07.2000
(51) Int. Cl.: B62D 7/16, F16C 11/06

(54) **Boîtier d'articulation à rotule, placé côté roue pour direction de véhicule automobile**
Radseitiges Kugelgelenkgehäuse für Kraftfahrzeuglenkung
Wheel side ball joint housing for a motor vehicle steering

(30) Priorité: 13.07.1999 FR 9909305
(43) Date de publication de la demande: 17.01.2001
(73) Titulaire: Société de Mécanique d'Irigny, 69540 Irigny (FR)
(72) Inventeur: Durand, Philippe, 69100 Villeurbanne (FR)
(74) Mandataire: Bratel, Gérard

(56) Documents cités:
- FR-A- 2 597 176
- US-A- 3 609 853
- US-A- 5 601 305

## Description

La présente invention concerne, de façon générale, les ensembles de direction pour véhicules automobiles. Cette invention s'intéresse, plus particulièrement, aux éléments de direction de véhicule automobile qui sont désignés comme « boîtier côté roue », et qui assurent, dans une telle direction, la liaison articulée entre une biellette de connexion, elle-même liée à une extrémité de la crémaillère, et un pivot, lui-même lié à un levier de direction, associé à la roue correspondante droite ou gauche.

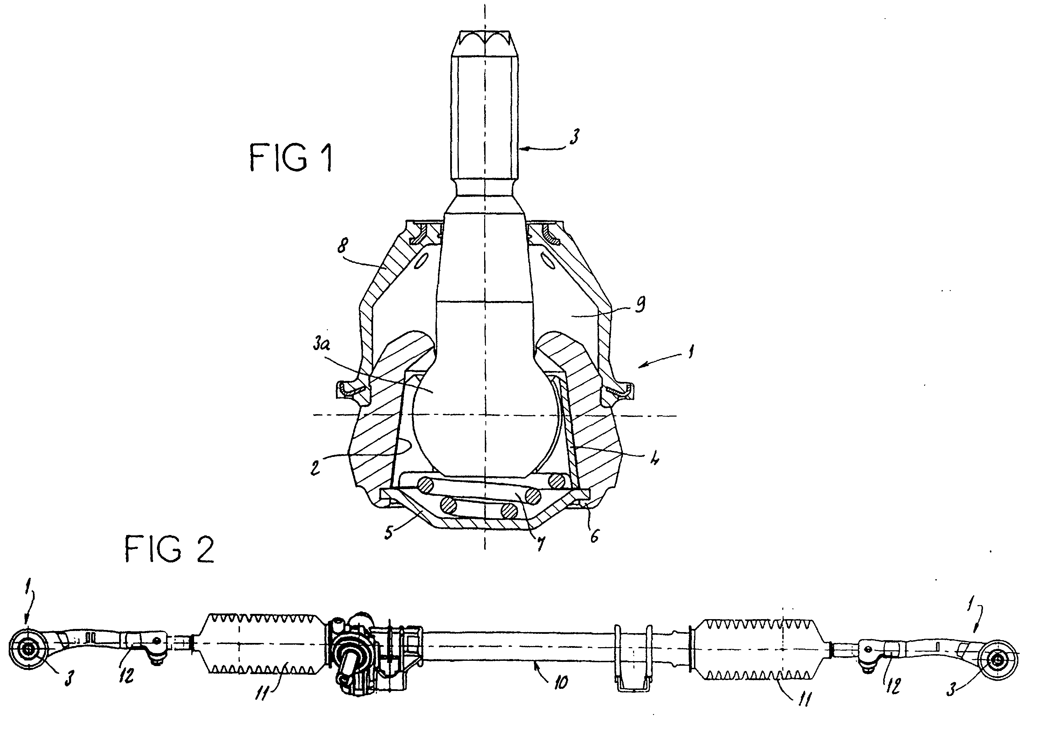

Un boîtier côté roue forme ainsi un logement, recevant un pivot à partie sphérique et réalisant une fonction de rotule. Dans les réalisations actuelles, comme le montre la figure 1, le boîtier 1 est usiné à sa partie inférieure, pour former un logement 2 ouvert vers le bas et recevant le pivot 3. Plus particulièrement, le logement 2 renferme une cage 4 emprisonnant la partie sphérique 3a du pivot 3, la cage présentant une surface sphérique complémentaire de la partie sphérique 3a. La partie inférieure du logement 2 est obturée par une coupelle 5, maintenue en place par un sertissage 6. Un ressort hélicoïdal 7, comprimé entre le fond de la coupelle 5 et la cage 4, assure la régulation des couples de frottement de la rotule, et le rattrapage des jeux éventuels, qui est également assuré par le fait que la cage 4 est fendue et se déplace à l'intérieur du logement 2 du boîtier. Un soufflet 8, monté sur la partie supérieure du boîtier 1 et traversé par le pivot 3, protège les éléments précédemment mentionnés en assurant l'étanchéité, et renferme une réserve de graisse présente en 9, ainsi qu'au niveau du ressort 7. A titre d'exemple, il peut ici être fait référence à la demande de brevet français N° 2597176.

La solution actuelle, qui vient d'être rappelée, comporte divers inconvénients, notamment en ce qui concerne les opérations de fabrication et d'assemblage.

Ainsi, les boîtiers côté roue actuels nécessitent, pour constituer le logement de la rotule, des opérations d'usinage importantes auxquelles s'ajoutent des opérations d'assemblage, notamment le sertissage de la coupelle de fermeture. Ces opérations d'assemblage se font sur deux côtés opposés du boîtier, lequel doit être retourné pour fixer le soufflet par encliquetage sur sa partie supérieure. De plus, ce soufflet n'assurant pas par lui-même une protection complète du boîtier, des revêtements de surface multiples doivent encore être appliqués ; en particulier, la coupelle de fermeture doit être zinguée puis peinte, après assemblage. Ce processus empêche d'utiliser des composants protégés "sur brut", car la zone sertie se retrouverait sans protection.

Le brevet US N° 5601305, à partir duquel est établi le préambule de la revendication 1, montre un joint à rotule pour véhicules automobiles, qui constitue un élément de suspension, et non un élément d'un ensemble de direction. Ce joint comprend un boîtier à fond fermé avec cage intérieure recevant la partie sphérique d'un pivot. La cage est maintenue par un organe annulaire logé dans une gorge du boîtier, tandis qu'un soufflet traversé par le pivot ferme et protège l'ensemble.

Dans ce document, l'organe annulaire précité apparaît comme un anneau élastique du genre "circlips", retenu par élasticité dans la gorge correspondante du boîtier, sans aucun sertissage. N'étant pas véritablement solidarisé avec le boîtier, cet anneau élastique risque de se déformer, se déplacer ou basculer, sous l'effet d'une force axiale ; il ne constitue donc pas un pas un moyen de retenue suffisamment efficace pour la cage.

De plus, l'organe élastique d'arrêt de la cage, dans le brevet US N° 5601305, se situe à distance de la partie sphérique du pivot, avec laquelle il ne possède aucun contact. Cet anneau ne peut donc constituer une surface de guidage et de retenue de la partie sphérique du pivot, d'autant plus que la section rectangulaire dudit anneau interdit une telle fonction de guidage.

Par conséquent, la fabrication et l'assemblage des boîtiers côté roue actuels restant des opérations relativement compliquées et coûteuses, la présente invention vise à éliminer ces inconvénients, en simplifiant la fabrication et l'assemblage des boîtiers côté roue, tout en améliorant leur protection, leur solidité et leur fonctionnement.

A cet effet, l'invention a pour objet un boîtier côté roue pour direction de véhicule automobile, du genre considéré, dont la portion évidée recevant le pivot est ouverte à sa seule partie supérieure, de manière à former elle-même la paroi latérale et le fond du logement de la partie sphérique du pivot, ce logement étant délimité, dans sa partie supérieure, par une rondelle sertie dont l'ouverture est traversée par ledit pivot, la rondelle sertie servant de butée de retenue pour la cage emprisonnant la partie sphérique du pivot, et cette rondelle sertie présentant intérieurement une surface sphérique prolongeant celle de la cage.

Ainsi, dans le boîtier côté roue, objet de l'invention, les moyens de délimitation du logement de la rotule permettent de diminuer les zones usinées, dans le cas d'un boîtier brut en acier forgé à chaud (ou mi-chaud). L'invention permet même de supprimer toutes les zones usinées, dans le cas d'un boîtier brut en acier issu de frappe à froid, ou en aluminium issu de thixomoulage ou d'un autre procédé de transformation de l'aluminium.

Par ailleurs, toutes les opérations d'assemblage se font désormais sur un seul et même côté du boîtier côté roue selon l'invention, ce qui évite un retournement de ce boîtier en particulier pour encliqueter le soufflet.

Toutes les zones du boîtier côté roue selon l'invention, susceptibles d'être usinées ou serties, sont emprisonnées par le soufflet d'étanchéité coiffant la partie supérieure du boîtier. Ceci permet d'éliminer les problèmes de revêtements de surface multiples.

En fait, le revêtement de surface nécessaire contre la corrosion peut être réalisé sur le boîtier côté roue brut, en garantissant une protection de l'ensemble de la surface soumise aux agressions extérieures.

La rondelle sertie, traversée par le pivot et retenant la cage de la rotule, possède en outre une fonction de limitation des débattements angulaires du pivot. Avantageusement, l'ouverture de cette rondelle sertie est de forme oblongue, de manière à permettre un débattement du pivot maximal qui est différent, selon deux directions d'axes perpendiculaires (axe longitudinal et axe transversal d'une telle ouverture oblongue).

Le fait que la rondelle soit sertie dans le boîtier assure une retenue particulièrement efficace de la cage, en interdisant tout déplacement axial de cette cage. De plus, par sa surface intérieure sphérique, la rondelle sertie constitue, structurellement et fonctionnellement, un prolongement de la cage, délimitant sur une certaine hauteur le logement de la partie sphérique du pivot, et elle contribue au guidage de cette partie sphérique.

Le logement précité peut comporter dans la région de son fond, selon une forme de réalisation de la présente invention, un joint torique ou un autre élément élastique, séparé ou intégré, assurant la régulation des couples de frottement et/ou le rattrapage d'un éventuel jeu, pour la fonction « rotule », au cours de l'utilisation du boîtier, ces moyens remplaçant avantageusement le ressort hélicoïdal habituel.

L'invention sera de toute façon mieux comprise à l'aide de la description qui suit, en référence au dessin schématique annexé représentant, à titre d'exemples, des formes d'exécution de ce boîtier côté roue pour direction de véhicule automobile.
Figure 2 est une vue d'ensemble d'une direction de véhicule automobile équipée de boîtiers côté roue conformes à la présente invention ;
Figure 3 est une vue en perspective détaillée, avec coupe, d'un boîtier côté roue selon l'invention ;
Figure 4 est un schéma montrant la configuration de la rondelle sertie de ce boîtier côté roue ;
Figure 5 est une vue similaire à figure 3, illustrant une variante de ce boîtier côté roue.

La figure 2 rappelle la structure générale d'une direction à crémaillère de véhicule automobile, dont elle montre le carter central tubulaire 10, les soufflets 11, et les deux biellettes de connexion 12 solidaires respectivement des boîtiers côté roue 1 droit et gauche. L'invention concerne la structure de ces boîtiers côté roue 1, décrits ci-après en utilisant (pour les parties correspondantes) les mêmes repères numériques que ceux de la figure 1.

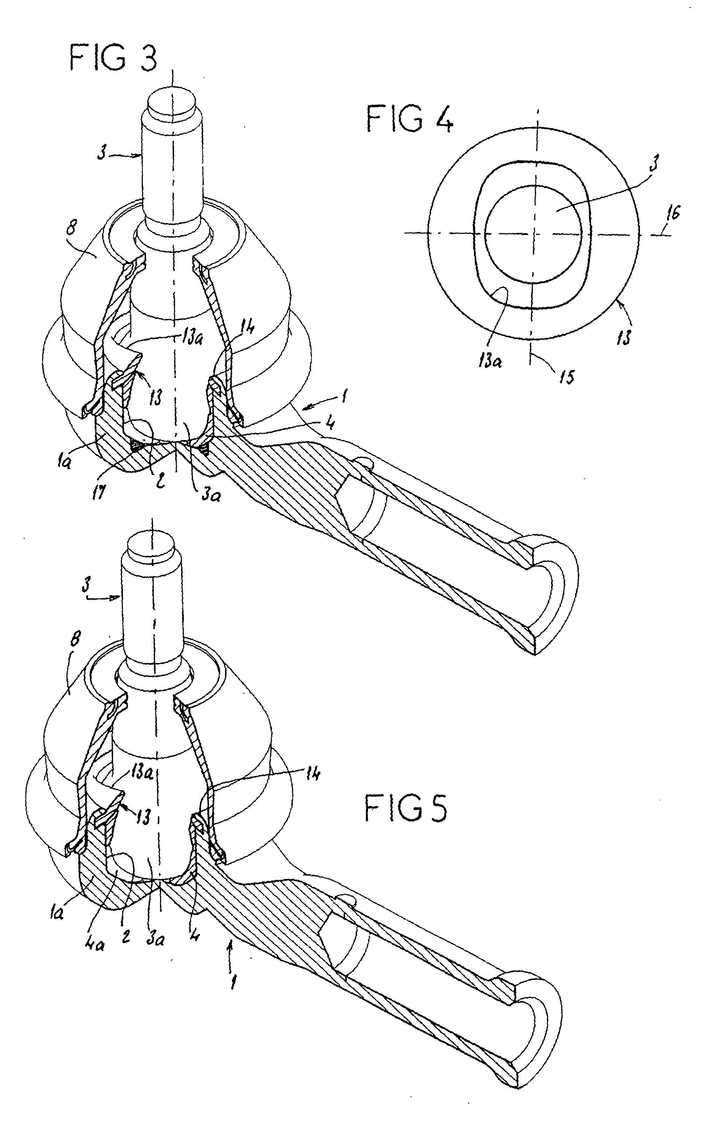

Comme le montre la figure 3, le boîtier côté roue 1 possède une portion évidée 1a, recevant le pivot 3, qui est ouverte à sa seule partie supérieure. Autrement dit, le logement 2 destiné à la partie sphérique 3a du pivot 3 possède un fond et une paroi latérale délimités par la matière du boîtier 1. Ce logement 2 renferme la cage 4, qui elle-même emprisonne la partie sphérique 3a du pivot 3, cette cage 4 possédant intérieurement une surface sphérique complémentaire de celle de la partie sphérique 3a du pivot 3.

Dans sa partie supérieure, la portion évidée 1a du boîtier 1 reçoit une rondelle 13, laquelle est fixée par un sertissage périphérique 14. L'ouverture 13a de la rondelle 13 est traversée par le pivot 3. La rondelle 13 sert de butée de retenue pour la cage 4.

La rondelle sertie 13 présente, intérieurement, une surface sphérique qui prolonge celle de la cage 4, et qui contribue ainsi à la délimitation du logement 2 de la partie sphérique 3a du pivot 3.

La portion évidée 1a du boîtier 1 est coiffée par un soufflet 8 d'étanchéité, traversé par le pivot 3. Le soufflet 8, fixé à l'extérieur de la portion évidée 1a, emprisonne ici la rondelle 13, et assure ainsi la protection de cette dernière.

Comme l'illustre la figure 4, l'ouverture 13a de la rondelle 13 possède une forme oblongue, sa dimension suivant une direction d'axe 15 étant supérieure à sa dimension suivant une direction d'axe 16 perpendiculaire à la précédente. Il en résulte que le débattement angulaire autorisé du pivot 3 suivant la direction de l'axe 15 est supérieur à son débattement angulaire autorisé suivant la direction de l'axe 16.

Comme le montre encore la figure 3, le fond de logement 2 du boîtier 1, constitué par la matière de ce boîtier 1, possède un évidement annulaire, qui reçoit un joint torique 17 agissant sous la cage 4 pourvue de fentes, pour réguler les couples de frottement de la rotule, et pour rattraper un éventuel jeu au cours de l'utilisation du boîtier 1.

La figure 5 illustre une variante de ce boîtier roue 1, dans laquelle le joint torique précité est supprimé, et remplacé par un élément intégré assurant la même fonction. Il peut s'agir ici, notamment, d'ailettes élastiques 4a formées à la base de la cage 4.

L'on ne s'éloignerait pas du cadre de l'invention, telle que définie dans les revendications annexées, en modifiant les détails de forme du boîtier côté roue, ou en destinant ce boîtier à des directions de tous types, manuelles ou assistées.

## Revendications

1. Boîtier côté roue pour direction de véhicule automobile, formant un logement (2) recevant un pivot (3) à partie sphérique (3a) emprisonnée dans une cage (4) à surface sphérique complémentaire, un soufflet (8) étant monté sur la partie supérieure du boîtier (1) et étant traversé par le pivot (3), ce boîtier (1) étant tel que sa portion évidée (1a) recevant le pivot (3) est ouverte à sa seule partie supérieure, de manière à former elle-même la paroi latérale et le fond du logement (2) de la partie sphérique (3a) du pivot (3), ce logement (2) étant délimité, dans sa partie supérieure, par une rondelle (13) dont l'ouverture (13a) est traversée par ledit pivot (3), la rondelle (13) servant de butée de retenue pour la cage (4) emprisonnant la partie sphérique (3a) du pivot (3), **caractérisé en ce que** la rondelle est sertie et **en ce que** cette rondelle sertie (13) présente intérieurement une surface sphérique prolongeant celle de la cage (4).

2. Boîtier côté roue selon la revendication 1, **caractérisé en ce que** l'ouverture (13a) de la rondelle sertie (13) est de forme oblongue, de manière à permettre un débattement angulaire du pivot (3), traversant cette ouverture (13a), qui est différent selon deux directions d'axes perpendiculaires (15, 16).

3. Boîtier côté roue selon la revendication 1 ou 2, **caractérisé en ce que** son logement (2) comporte dans la région de son fond un joint torique (17) ou autre élément élastique (4a), séparé ou intégré, assurant la régulation des couples de frottement et/ou le rattrapage d'un éventuel jeu, pour la fonction « rotule ».

## Claims

1. A wheel side bearing for the steering of an automobile vehicle, forming a housing (2) which receives a pivot (3) having a spherical part (3a) which is held captive in a cage (4) with a complementary spherical surface, a gaiter (8), through which the pivot (3) passes, being mounted on the upper part of the bearing (1), said bearing (1) being such that its hollow portion (1a) which receives the pivot (3) is open at its upper part only so that it itself forms the sidewall and the base of the housing (2) of the spherical part (3a) of the pivot (3), said housing (2) being delimited in its upper part by a washer (13), through the opening (13a) of which said pivot (3) passes, the washer (13) serving as a retaining stop for the cage (4) which holds the spherical part (3a) of the pivot (3) captive, **characterised in that** the washer is a set washer and that said set washer (13) has a spherical internal surface which prolongs that of the cage (4).

2. A wheel side bearing according to claim 1, **characterised in that** the opening (13a) of the set washer (13) is oblong in shape so as to permit angular deflection, which is different in two perpendicular axial directions (15, 16), of the pivot (3) which passes through said opening (13a).

3. A wheel side bearing according to claim I or 2, **characterised in that** in the region of its base its housing (2) comprises a separate or integral O-ring joint (17) or other elastic element (4a) which ensures the control of friction torque and/or the elimination of any possible play for "ball joint" operation.

## Patentansprüche

1. Radseitiges Gehäuse für eine Kraftfahrzeuglenkung, das eine Aufnahme (2) bildet, die einen Gelenkzapfen (3) mit einem sphärischen Teil (3a) aufnimmt, das in einem Käfig (4) mit einer komplementären sphärischen Oberfläche eingeschlossen ist, wobei ein Balg (8) am oberen Teil des Gehäuses (1) angebracht ist und von dem Gelenkzapfen (3) durchquert wird, wobei das Gehäuse (1) so ausgelegt ist, dass sein den Gelenkzapfen (3) aufnehmender ausgesparter Abschnitt (1a) an seinem einzigen oberen Teil geöffnet ist, um an diesem selbst die Seitenwand und den Boden der Aufnahme (2) des sphärischen Teils (3a) des Gelenkzapfens (3) zu bilden, wobei die Aufnahme (2) in ihrem oberen Teil von einer Scheibe (13) begrenzt ist, deren Öffnung (13a) vom Gelenkzapfen (3) durchquert wird, wobei die Scheibe (13) als Rückhalteanschlag für den Käfig (4) dient, der den sphärischen Teil (3a) des Gelenkzapfens (3) einschließt, **dadurch gekennzeichnet, dass** die Scheibe gefalzt ist, und dass diese gefalzte Scheibe (13) im Inneren eine sphärische Oberfläche aufweist, die diejenige des Käfigs (4) verlängert.

2. Radseitiges Gehäuse nach Anspruch 1, **dadurch gekennzeichnet, dass** die Öffnung (13a) der gefalzten Scheibe (13) von länglicher Form ist, um eine Winkelverschiebbarkeit des Gelenkzapfens (3), der diese Öffnung (13a) durchquert, zu ermöglichen, und diese Winkelverschiebbarkeit in zwei senkrechten Achsenrichtungen (15, 16) unterschiedlich ist.

3. Radseitiges Gehäuse nach Anspruch 1 oder 2, **dadurch gekennzeichnet, dass** seine Aufnahme (2) im Bereich seines Bodens eine O-Ring-Dichtung (17) oder ein anderes elastisches Element (4a) umfasst, das eigenständig oder integriert ist, das die Regelung der Reibungsmomente und/oder Beseitigung eines eventuell vorhandenen Spiels für die Funktion "Kugelgelenk" sicherstellt.
